# EUROPEAN PATENT APPLICATION

(11) **EP 4 659 863 A1**
(43) Date of publication of application: **10.12.2025**
(21) Application number: 25178394.0
(22) Date of filing: 23.05.2025
(51) Int. Cl.: B04C 5/04, B01D 35/06, B03C 1/033, B03C 1/28, B04C 5/12, B04C 9/00, B04C 11/00

(54) **FILTRATION DEVICE**

(30) Priority: 03.06.2024 SE 2450591
(71) Applicant: Impel AB, 250 15 Helsingborg (SE)
(72) Inventor: Andersson, Ludvig, 211 19 Malmö (SE); Mohammad, Mahmoud, 256 61 Helsingborg (SE)
(74) Representative: Hansson Thyresson AB

(57) **Abstract**

A filtration device (1) is provided, comprising a valve portion (20) having an open position and a closed position. The filtration device (1) further comprises a filter portion (10) having a separation tank (11) configured to receive liquid when the valve (20) is in the open position, and a flow plate (30) separating the valve portion (20) and the filter portion (10). The flow plate (30) comprises an ejector (31) configured to direct liquid into the separation tank (11) in a direction towards an inner surface of the separation tank (11) such that a liquid cyclone is obtained.

## Description

### TECHNICAL FIELD

The present invention relates to a filtration device and a hydronic system comprising such filtration device.

### BACKGROUND

Hydronic systems, which involve the use of liquid as a heat transfer medium, are widely used in heating and cooling applications. These systems typically include a network of pipes, pumps, valves, and heat exchangers to transfer heat between a heat source and the environment or between different parts of a building. The performance and efficiency of such hydronic systems are valuable for maintaining comfortable indoor temperatures and minimizing energy consumption.

One challenge in maintaining the performance and efficiency of a hydronic system is the presence of contaminants in the liquid medium. Contaminants can include metal and plastic chips from the assembly process, rust flakes, magnetite, and other debris. These contaminants can accumulate in the system over time, leading to clogs, reduced heat transfer efficiency, and increased wear on system components. In addition, the presence of oxygen and other impurities in the liquid can promote the growth of bacteria and biofilm, which can further contribute to clogging and reduced system performance, as well as shortening the lifespan of the components.

To address these issues, the hydronic system often includes filters or strainers to remove contaminants from the liquid medium. However, the effectiveness of these filters depends on their ability to capture and retain contaminants, as well as the ease with which they can be accessed and cleaned. In many cases, the physical design of hydronic systems can make it difficult to access and clean filters, leading to inadequate maintenance and increased risk of clogging and system failure.

Furthermore, the process of cleaning or replacing filters in the hydronic system can be labor-intensive and time-consuming, leading to increased maintenance costs and system downtime. In some cases, the need to isolate the filter from the rest of the system for cleaning or replacement may require the use of additional external valves, further complicating both the installation process and the maintenance process.

There is a need for improved filtration in hydronic systems that can effectively remove contaminants from the liquid medium while minimizing the challenges associated with filter access, cleaning, and maintenance. Such improvements may enhance the reliability and efficiency of hydronic systems, reduce the power consumption of the system due to a reduced pressure drop in the system resulting in less power consumed by circulation pumps, reduce installation and maintenance costs, and minimize system downtime.

From the above it is understood that there is room for improvements and the invention aims to solve or at least mitigate the above and other problems.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect a filtration device is provided, comprising a valve portion having a valve housing and a valve member. The valve housing comprises a valve housing inlet and a valve housing outlet. The valve member is positioned within the valve housing and comprises a valve member inlet and a valve member outlet. The valve member is moveable between an open position of the valve portion and a closed position of the valve portion. The filtration device further comprises a filter portion having a separation tank configured to receive liquid when the valve portion is in the open position, and a flow plate separating the valve portion and the filter portion. The flow plate comprises an ejector configured to direct liquid into the separation tank in a direction towards an inner surface of the separation tank such that a liquid cyclone is obtained. The valve housing outlet has an annular shape and is concentric relative the valve housing inlet.

An advantage of the present filtration device is an integrated shut-off mechanism, provided by the valve housing and valve member, reducing the need for external valves arranged before and after the filtration device. This filtration device is also beneficial in that the cyclone obtained provides for extraction of very fine particles from the liquid, and thus an effective filtration.

In one embodiment, in the closed position of the valve, the valve member outlet and the valve housing outlet are positioned in a non-communicating position, and the valve member inlet and the valve housing inlet are positioned in a non-communicating position.

In one embodiment, in the open position of the valve, the valve member inlet is in fluid communication with the valve housing inlet, and the valve member outlet is in fluid communication with the valve housing outlet.

In one embodiment, the filtration device further comprises an operating means configured to allow movement of the valve member.

In one embodiment, the valve member is rotatable between the open position of the valve and the closed position of the valve. Optionally, the valve member is rotatable approximately 90° between the open position and the closed position.

In one embodiment, the valve member is translationally moveable between the open position of the valve and the closed position of the valve.

In one embodiment, the valve member inlet has an approximately circular shape matching a shape of the valve housing inlet.

In one embodiment, the valve member outlet has an approximately circle segment shape matching a shape of at least a portion of the valve housing outlet.

In one embodiment, the separation tank comprises a thermowell housing a magnet configured to attract magnetic particles from the liquid.

In one embodiment, the separation tank comprises a separation means configured to collect particles from the liquid. Optionally, the particles are non-magnetic particles.

In one embodiment, the separation tank comprises a separation plate dividing the separation tank into a collection portion configured to accumulate particles separated from the liquid. Optionally, the particles are non-magnetic particles.

An advantage of this filtration device is that it is easy to clean and/or flush out the collected particles. Further, since the particles are mainly gathered in the collection portion, and secondly by the separation means, the risk for clogging of the separation means, resulting in an increased pressure drop over the filtration device, is reduced.

In one embodiment, the ejector is in fluid communication with the valve member inlet in the open position of the valve.

In one embodiment, the valve housing is part of a housing of the filtration device.

In one embodiment, the filtration device, further comprising at least one sealing means configured to seal an interface between the valve housing and the valve member.

In a second aspect, a hydronic system comprising the filtration device is provided.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
Fig. 1 is an isometric view of a filtration device according to one embodiment,
Fig. 2 is an isometric view of the filtration device according to one embodiment,
Fig. 3 is a side view of the filtration device in Figs 1-2,
Fig. 4 is a side view of the filtration device in Figs 1-3,
Fig. 5 is a front view of the filtration device in Figs 1-4,
Fig. 6 is a back view of the filtration device in Figs 1-5,
Fig. 7 is a top view of the filtration device in Figs 1-6,
Fig. 8 is a bottom view of the filtration device in Figs 1-7,
Fig. 9 is an exploded view of the filtration device in Figs 1-8,
Fig. 10 is an exploded view of the filtration device in Figs 1-8,
Fig. 11 is an isometric view of a connection means according to one embodiment,
Fig. 12 is an isometric view of a valve housing according to one embodiment,
Fig. 13 is an isometric view of a valve member according to one embodiment,
Fig. 14 is an isometric view of a flow plate according to one embodiment,
Fig. 15a is a side view of a separation tank according to one embodiment,
Fig. 15b isa a top perspective view of the separation tank in Fig. 15a,
Fig. 16 is an isometric view of a separation plate according to one embodiment,
Fig. 17 is an isometric view of a separation means according to one embodiment,
Fig. 18 is a back view of the filtration device in Figs 1-8,
Fig. 19 is a side view of the filtration device in Figs 1-8,
Fig. 20 is a side section view along line A-A of the filtration device in Fig. 18,
Fig. 21 is a schematic view of the cyclone effect, and
Fig. 22 is a flow chart of an emptying process of the filtration device.

Further, in the figures like reference characters designate like or corresponding parts throughout the several figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

In the description and claims the word "comprise" and variations of the word, such as "comprising" and "comprises", does not exclude other elements or steps.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

The filtration device 1 is designed to utilize the cyclone effect in order to accomplish an effective filtration process. The cyclone effect is a well-known phenomenon, but for the sake of completeness, a brief description of it will be given here.

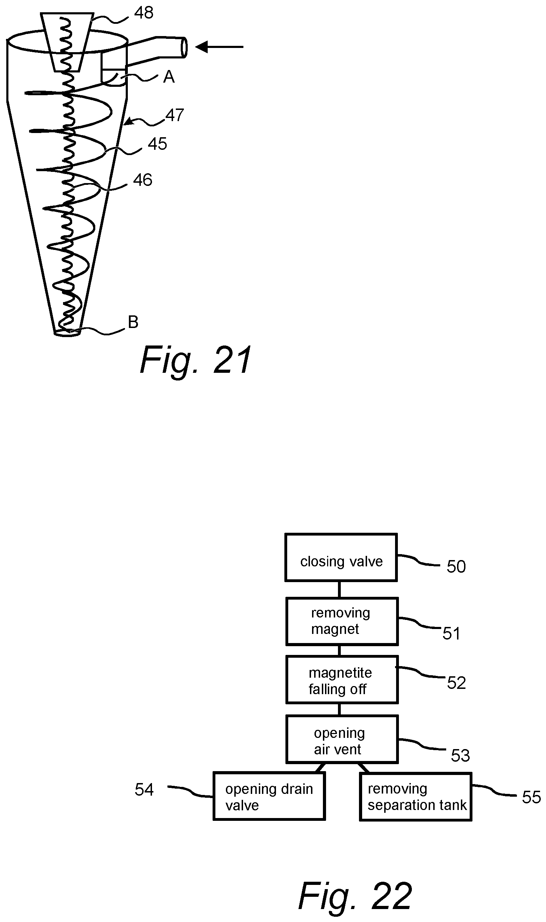

In Fig. 21, a schematic principle of the cyclone effect is shown. Liquid enters a conical container 47 in a tangential manner in the area of point A. A first vortex 45 is formed, due to the direction of the incoming liquid, and the conical shape of the container 47. The liquid in the first vortex follows the inner wall of the container 47. The first vortex has a direction from the top of the container 47 towards the bottom. The decreasing diameter of the conical container 47 towards the bottom end results in an increased speed of the liquid as it approaches the bottom.

In the area of point B, at the bottom of the conical container 47, a second vortex 46 is formed. The second vortex 46 is a fast, upwards rotating spiral movement of the liquid. The second vortex 46 follows the center of the conical container 47.

The liquid in the second vortex 46 reaches an outlet 48 located in the top of the conical container 47 where it is discharged.

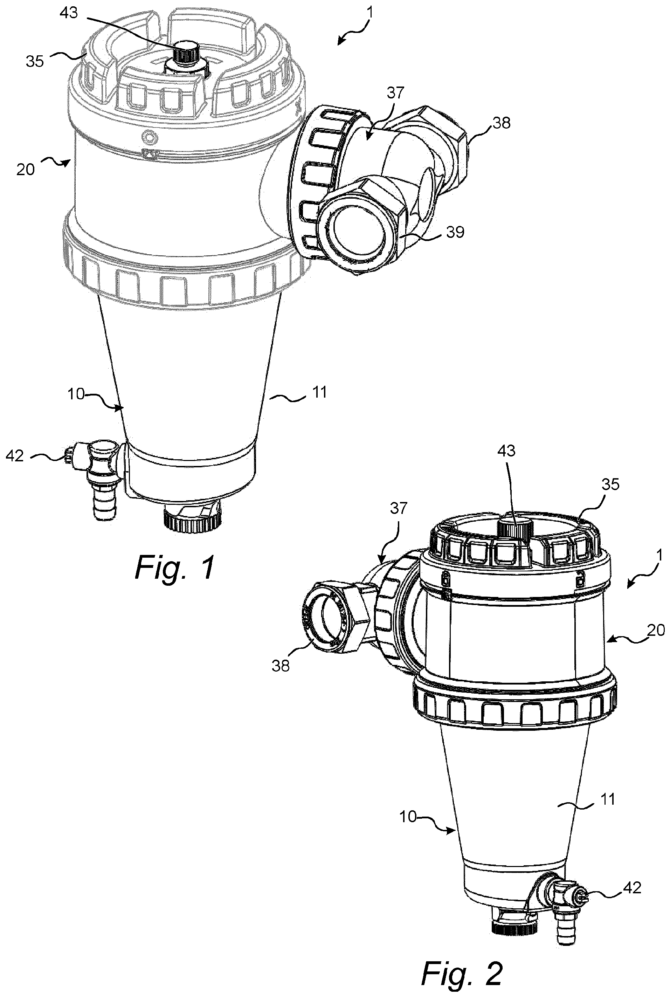

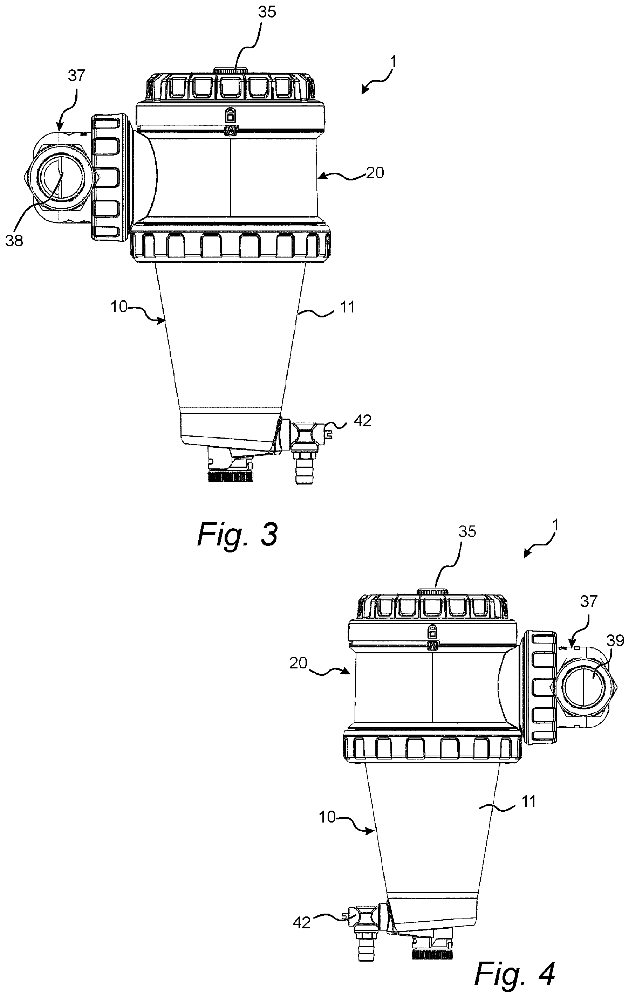

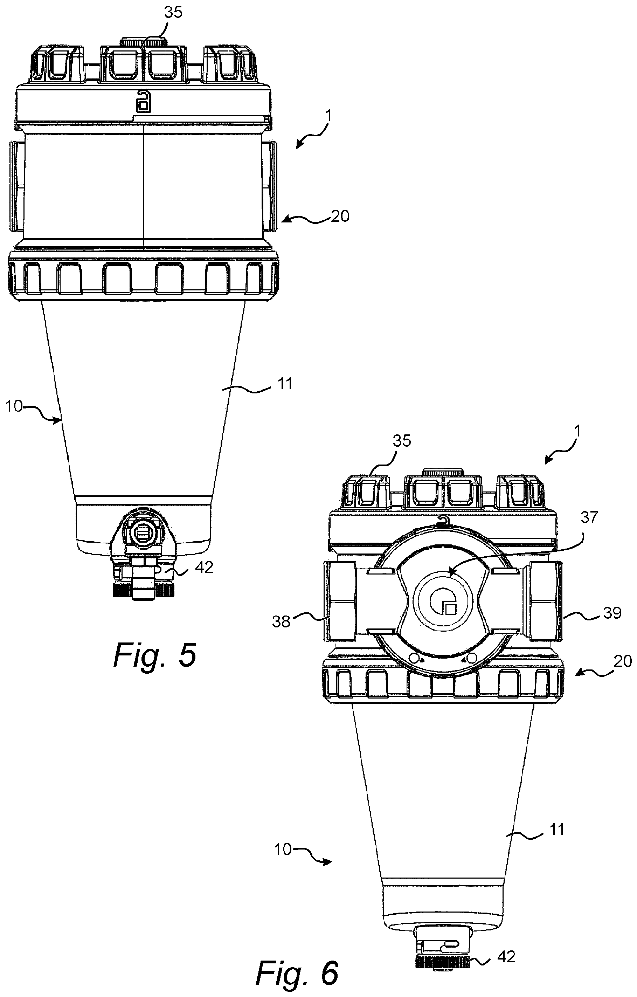

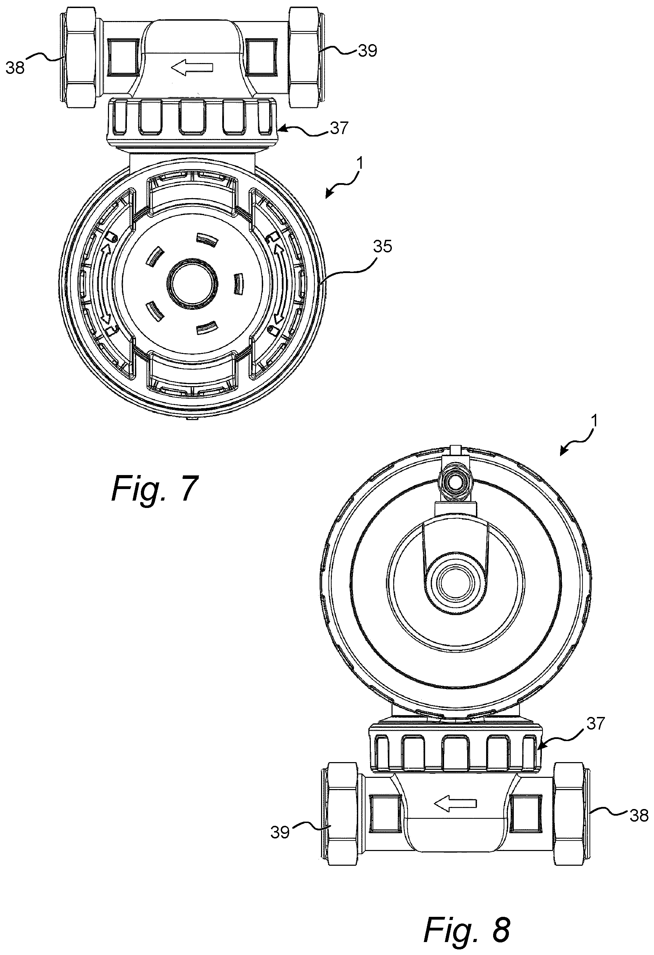

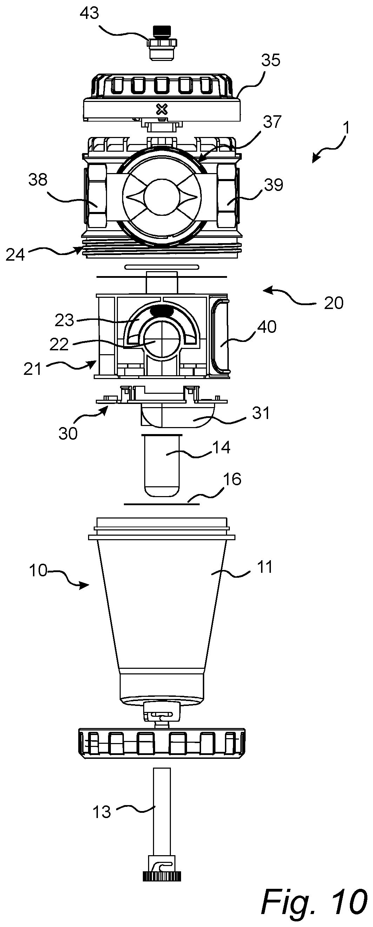

Referring to Figs 1-10, a hydronic system filtration device 1 is shown. The hydronic system filtration device 1 is configured to be arranged in a hydronic system where it is configured to separate particles, debris, etc. from the liquid of the hydronic system. The filtration device 1 may alternatively be arranged in any other system conveying liquid which may be in need of clearance or purification from particles.

The filtration device 1 comprises a filter portion 10, a valve portion 20, and a connection means 37.

The filtration device 1 further comprises an air vent valve 43. The air vent valve 43 is configured to be openable, optionally by removing, such as unscrewing, the valve 43. By opening or removing the air vent valve 43, the filtration device 1 may be de-aerated. By opening or removing the air vent valve 43, chemicals may be supplied to the liquid in the system. The chemicals may be for instance inhibitors for treatment of the liquid.

The filtration device 1 further comprises a drain valve 42 for draining of liquid from the filtration device 1. Particles accumulated in the filtration device may be drained from the system by means of the drain valve 42.

The connection means 37 is configured to be connected to a conduit system of the liquid conveying system, optionally a hydronic system. For this, the connection means 37 has a connection means inlet 38 and a connection means outlet 39.

The valve portion 20 is designed to control the flow of liquid through the filtration device 1. The valve portion 20 comprises a valve housing 24 and a valve member 21. The valve portion 20 further comprises an operating means 35 for maneuvering the valve portion 20 between an open and a closed position.

In some embodiments, the operating means 35 is configured to be positioned in several positions. The positions may include e.g. an open position, a closed position and at least one additional position. The additional position may e.g. be a by-pass position, in which fluid is not directed into the filtration device 1.

The filter portion 10 comprises a separation tank 11 and the drain valve 42.

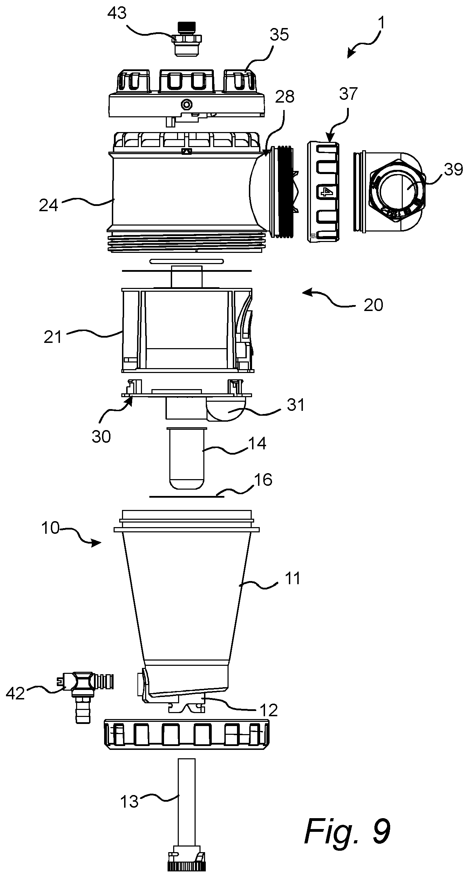

Now referring to Figs 9-10, additional components of the filtration unit 1 will be described. The filtration device 1 comprising these components will be described in its assembled state. Each component will be further explained below.

The valve portion 20 comprises the valve housing 24, the valve member 21, the operating means 35, and a flow directional means, in this embodiment embodied as a flow plate 30. The valve housing 24 is attached to the connection means 37. The operating means 35 is arranged in one end portion of the valve housing 24. The valve housing 24 houses the valve member 21. The flow plate 30 is arranged in contact with the valve member 21, distal from the operating means 35. The valve member 21 is movably arranged inside the valve housing 24. The valve member 21 is configured to be in operational connection with the operating means 35. By maneuvering of the operating means 35, the valve member 21 is displaced between at least two positions. The positions may be an open position and a closed position. Further intermediate positions are also possible in some embodiments.

The valve member 21 may be provided with a sealing 40 on at least a portion of its outer circumferential mantle surface. The sealing 40 is configured to seal between the outer mantle surface of the valve member 21 and the inner mantle surface of the valve housing 24.

In the open position of the valve 20, the sealing is sandwiched between the outer mantle surface of the valve member 21 and the inner mantle surface of the valve housing 24.

In the closed position of the valve 20, the portion of the valve member 21 provided with the sealing 40 is aligned with the valve housing inlet 25 and the valve housing outlet 26. This enhances the sealing when the valve 20 is closed. The sealing 40 may be made of plastic, for example of TPE plastic.

The filter portion 10 comprises the separation tank 11, a separation means 14, a separation plate 16 and a drain valve 42. The separation tank 11 is connected to the flow plate 30 in a first end portion. The separation means 14 is arranged in the first end portion of the separation tank 11 and connected to the flow plate 30.

The separation tank 11 further comprises a thermo-well 12, located in a second end portion of the separation tank, opposite to the first end portion. The thermo-well houses a magnet 13.

The separation plate 16 is arranged in the second end portion of the separation tank 11. The drain valve 42 is arranged in the second end portion of the separation tank 11. The separation plate 16 is arranged closer to a center of the separation tank 11 compared to the drain valve 42. The drain valve 42 is arranged closer to a bottom portion of the separation tank 11 compared to the separation plate 16.

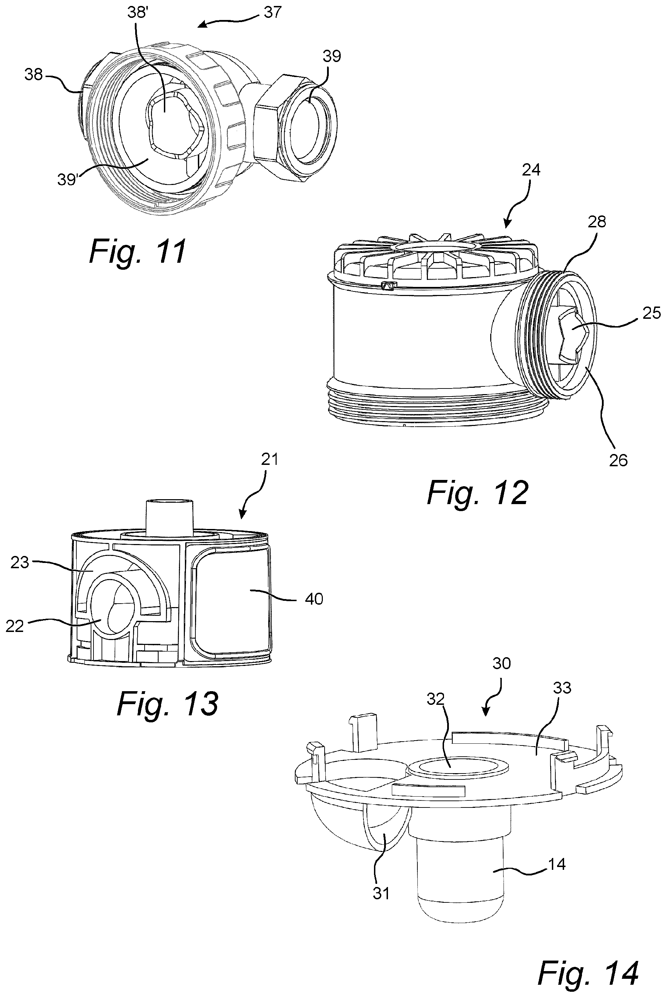

Referring to Fig. 11, one embodiment of the connection means 37 is shown in detail. The connection means comprises a connection means inlet 38 and a connection means outlet 39. The connection means inlet 38 is configured to be attached to a liquid conduit of e.g. a hydronic system, or other liquid system and to be in fluid connection with a valve housing inlet 25. The connection means inlet 38 is configured to conduct liquid into the filtration device 1. The connection means outlet 39 is configured to be attached to a liquid conduit of e.g. a hydronic system, or other liquid system and to be in fluid connection with a valve housing outlet 26. The connection means outlet 39 is configured to conduct liquid out of the filtration device 1.

The connection means 37 further comprises a double walled portion comprising a portion 38' of the connection means inlet 38, designed as a circular portion located innermost in the double walled configuration. The double walled portion further houses a portion 39' of the connection means outlet 39 designed as an annular portion encircling the circular connection means inlet 38'.

Optionally, the connection means inlet 38 has another shape, such as elliptical, or any other suitable shape. The portion 39' of the connection means outlet 39 is designed to enclose the portion 38' of the circular connection means inlet 38 regardless of the shape of the connection means inlet 38.

Referring to Fig. 12, one embodiment of the valve housing 24 is shown in detail. The valve housing 24 comprises a mainly cylindrical element configured to be connected to the filter portion 10 in one end, and to the operating means 35 in the opposite end. In one embodiment, the valve housing 24 is configured to form part of an outer housing of the filtration device 1.

The valve housing 24 comprises an inlet/outlet portion 28 provided in the mantle surface. The inlet/outlet portion is double walled, forming two separate flow channels. The inlet/outlet portion comprises a circular valve housing inlet 25 and an annular valve housing outlet 26 encircling the valve housing inlet 25.

In the assembled state of the filtration device 1, the inlet/outlet portion 28 is configured to be attached to the connection means 37. The connection means inlet 38 is configured to be in fluid communication with the valve housing inlet 25, and the connection means outlet 39 is configured to be in fluid communication with the valve housing outlet 26.

Referring to Fig. 13, one embodiment of the valve member 21 is shown in detail. The valve member 21 comprises a mainly cylindrical element configured to be movably received in the valve housing 24. In one embodiment, the valve member 21 is translationally displaceable in the valve housing 24. In one embodiment, the valve member 21 is rotationally or turnably displaceable in the valve housing 24.

The valve member 21 comprises a valve member inlet 22 and a valve member outlet 23. The valve member inlet 22 comprises a circular opening in the mantle surface of the valve member 21. The valve member inlet 22 is configured to direct liquid into the inner of the valve member 21.

The valve member outlet 23 comprises an opening, shaped as a circle segment, in the mantle surface of the valve member 21. In the shown embodiment, the valve member inlet 22 and the valve member outlet 23 are arranged vertically separated in relation to each other. The valve member outlet 23 partially encircles the valve member inlet 22.

In the assembled state of the filtration device 1, the valve member 21 is configured to be displaceable between an open valve state and a closed valve state. In the open valve state, the valve member inlet 22 is configured to be in fluid communication with the valve housing inlet 25, and the valve member outlet 23 is configured to be in fluid communication with the valve housing outlet 26.

In the closed valve state, the valve member inlet 22 is configured to be in non-fluid communication with the valve housing inlet 25, and the valve member outlet 23 is configured to be in non-fluid communication with the valve housing outlet 26.

In order to transition the valve 20 from the open valve state to the closed valve state, the valve member 21 is configured to be displaceable in relation to the valve housing such that the valve member inlet 22 and the valve member outlet 23 is facing an internal mantle surface of the valve housing 24, instead of facing the valve housing inlet 25 and the valve housing outlet 26, respectively.

The shape of the valve housing inlet 25 is designed to correspond to the shape of the valve member inlet 22. The shape of the valve member outlet 23 is designed to correspond to a portion of the shape of the valve housing outlet 26. The partly corresponding shapes entails that the valve member outlet 23 is not overlapping the valve housing inlet 25 in any rotational position of the valve member 21.

Referring to Fig. 14, one embodiment of the flow plate 30 is shown in detail, together with the separation means 14. The flow plate 30 comprises a disc shaped portion 33 having a central opening 32 forming a liquid flow channel for outbound liquid. In one embodiment, the central opening 32 is provided with sleeve-like extension, extending upwards or downwards from the disc-shaped portion 33. The separation means 14 is arranged in connection with the central opening 32.

The flow plate 30 further comprises an ejector 31 forming a liquid flow channel for inbound liquid. The disc shaped portion 33 comprises an opening in connection with which the ejector 31 is arranged. The ejector 31 has the shape of a semi-torus or semi-sphere. The ejector 31 is arranged on a lower side of the disc shaped portion 33.

In the assembled state of the filtration device 1, the flow plate 30 is configured to be attached to the separation means 14. Optionally, it is attached by means of a bayonet mount, a rail mount, a snap mount or any other suitable mount. Optionally, the flow plate 30 is attached to one or both of the valve housing 24 and/or the valve member 21.

In the assembled state of the filtration device 1, the ejector 31 is configured to face the inner of the separation tank 11. In the assembled state of the filtration device 1, the ejector 31 is configured to form a conduit between the inner of the valve member 21 and the separation tank 11. The ejector 31 is configured to eject liquid into the separation tank 11. The ejector 31 is designed to eject liquid into the separation tank 11 in a cyclone manner.

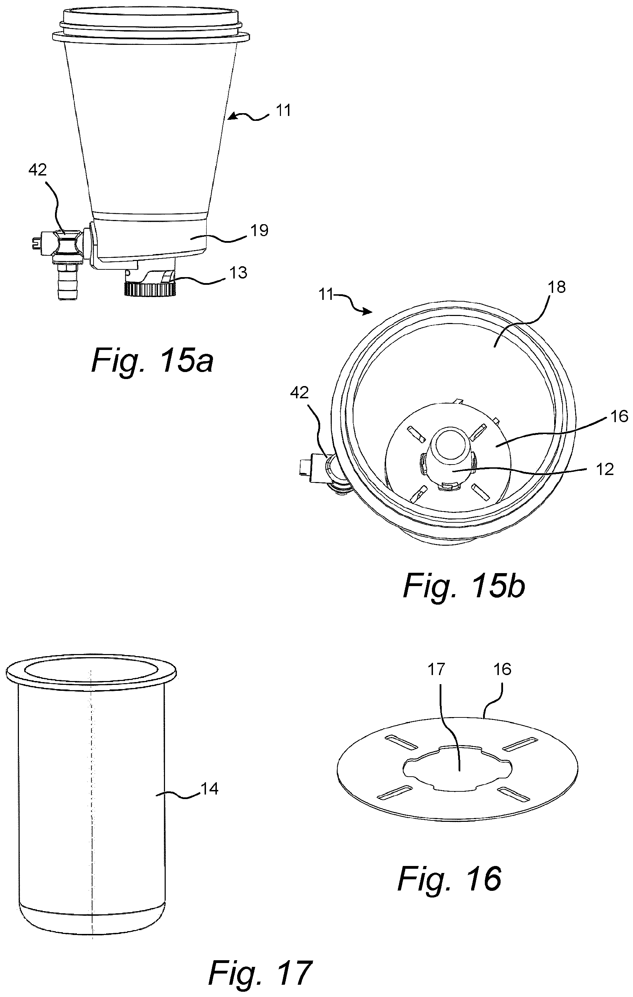

Referring to Figs 15a and 15b, one embodiment of the separation tank 11 is shown in detail. The separation tank 11 is configured to be attached to the valve housing 24. In one embodiment, one or more, optionally two, O-rings are provided for sealing between the separation tank 11 and the valve housing 24.

The geometry of the separation tank 11 is designed to promote and enhance a cyclone movement of the liquid entering the separation tank 11. The cyclone movement of the liquid is configured to take place along an inner wall 18 of the separation tank 11, from an upper portion of the separation tank 11 towards a bottom portion of the separation tank 11.

In the bottom portion of the separation tank 11, a thermowell 12 is arranged. The thermowell 12 is configured to receive and house a magnet 13, optionally a rod shaped magnet. By arranging the magnet 13 in the thermowell 12, the magnetite attracted by it does not come into direct contact with the magnet 13. Thus, the magnetite is released from the outer surface of the thermowell 12 when the filtration device 1 is opened for maintenance, i.e. emptying the device of collected debris, and the magnet 13 is removed from the thermowell 12.

The separation tank 11 is releasably attached to the valve housing 24, optionally by a screw attachment or a snap attachment. This facilitates and/or enables cleaning of the separation tank 11 and of the separation means 14 housed therein.

Referring to Fig. 16, one embodiment of the separation plate 16 is shown in detail. The separation plate 16 is configured to be arranged in connection with the thermowell 12. The separation plate 16 comprises a center opening 17. The center opening is configured to receive the thermowell 12. The separation plate 16 may be firmly mounted to the thermowell 12, or it may be movably, for instance rotationally and/or translationally movably attached to the thermowell 12. Optionally, the separation plate 16 is made of stainless steel. The separation plate 16 is configured to reduce the velocity of the liquid in the bottom portion of the separation tank 11.

Referring to Fig. 17, one embodiment of the separation means 14 is shown in detail. In this embodiment, the separation means 14 is a strainer or sieve. The separation means 14 is configured to separate particles, optionally non-magnetic particles, from the liquid, which has not already been separated from the liquid by means of the cyclone effect. The separation means 14 may be configured to be attached to the flow plate 30. In another embodiment, the separation means 14 may be attached to the thermowell 12 or to the separation tank 11.

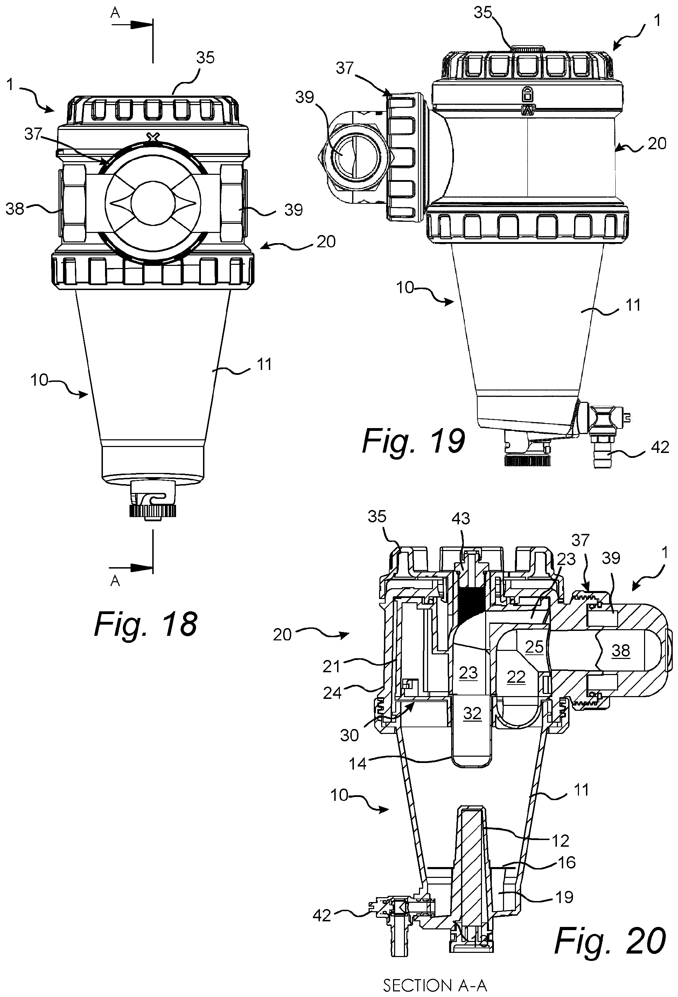

Referring to Figs 18-20, the function of the filtration device 1 will be described.

In the open position of the valve portion 20, liquid enters the filtration device 1 via connection device inlet 38. The valve member 21 is positioned such that the valve member inlet 22 and the valve housing inlet 25 are positioned in an overlapping manner. In this position of the valve member 21, the valve member outlet 23 and the valve housing outlet 26 are also positioned in an overlapping manner. Thus, fluid communication via two separate passages/flow channels between the valve housing 24 and the valve member 21 is obtained.

The liquid thus flows through the valve housing inlet 25 and the valve member inlet 22 and enters the inner of the valve member 21 where it is directed to the flow plate 30 ejector 31.

The ejector 31 ejects the liquid into the separation tank 11 of the filter portion 10 of the device 1. The ejector 31 is designed to eject the liquid in an outwards direction, such that the liquid has a velocity towards the inner surface of the separation tank 11. In this way, the cyclone effect is obtained. The liquid follows the inner surface of the separation tank 11, forming the first vortex of the cyclone. The conical shape of the separation tank 11 further contributes to and enhances the cyclone effect.

Thanks to the cyclone effect, particles present in the liquid hit the inner wall of the separation tank 11, they are thus slowed down, and they fall towards the bottom of the separation tank 11, corresponding to the second end portion of the separation tank 11. The particles separated from the liquid are accumulated below the separation plate 16.

The separation plate 16 is designed such that the velocity of the liquid is reduced when it approaches the second end portion of the separation tank 11. Thus, the flow of liquid is directed towards the center of the second end portion of the separation tank 11. Here, the liquid pass by the thermowell 12, housing the magnet 13. Magnetite, not having been separated by the cyclone effect and still being present in the liquid, is attracted by the magnet 13. The magnetite accumulates on the surface of the thermowell 12 facing the inner of the separation tank 11.

From the bottom/second end portion of the separation tank 11, the liquid enters/forms/creates the second vortex of the cyclone, such that a cyclone is obtained. The liquid moves in the second vortex upwards along the center of the separation tank 11 towards the separation means 14.

The liquid pass through the separation means 14, whereas particles possibly still present in the liquid, i.e. not having been attracted by the magnet 13 or separated by the cyclone effect and accumulated below the separation plate 16, is collected by the separation means 14.

Thereafter, the liquid passes through the flow channel 32 provided in the center of the flow plate 30. It then enters the valve member outlet 23 and valve housing outlet 26 consecutively. The liquid leaves the filtration device 1 via the connection means outlet 39.

Referring to Fig. 22, the process of emptying the filtration device 1 will be described. First, the valve member 21 is moved 50, e.g. rotated or turned, to a certain degree, in order to obtain the closed position of the valve portion 20. In one embodiment, the valve member 21 is turned 90° compared to the open position of the valve. In this state, the valve member inlet 22 faces the inner wall of the valve housing 24. Thus, the valve member inlet 22 and the valve housing inlet 25 are positioned in a non-overlapping manner. E.g., the valve member inlet 22 and the valve housing inlet 25 are positioned on different peripheral locations. At a 90° rotation of the valve member 21, the valve member inlet 22 and the valve housing inlet 25 are separated by 90° in the closed position of the valve 20.

In this position of the valve member 21, i.e. the closed position of the valve 20, the valve member outlet 23 and the valve housing outlet 26 are also positioned in a non-overlapping manner. Thus, fluid communication between the valve housing 24 and the valve member 21 is prevented. In order to enhance the seal between the valve housing 24 and the valve member 21, the sealing means 40 provided on the outer mantle surface of the valve member 21 is positioned aligned with the valve housing inlet 25 and valve housing outlet 26.

When the valve 20 is in the closed position, liquid is prevented from flowing through the interface between the valve housing 24 and the valve member 21. The flow of liquid, and thus the liquid cyclone, is interrupted.

When the valve 20 is in the closed state, the magnet 13 is removed 51 from the thermowell 12. When the magnet 13 is no longer present in the thermowell12, the magnetite accumulated on the surface of the thermowell 12 facing the inner of the separation tank 11, is no longer affected by the magnetic force and thus falls 52 to the bottom of the separation tank 11.

Optionally, the air vent valve 43 is opened 53 to release the internal pressure of the filtration device 1.

Thereafter, the separation tank 11 may be removed 54 from the filtration device 1 and emptied of the particles accumulated in the collection portion 19. Alternatively or additionally, the drain valve 42 is opened 55 and the particles accumulated in the collection portion 19 below the separation plate 16 is drained or flushed out from the filtration device 1.

The various embodiments described above are provided by way of illustration only and should not be construed to limit the invention. For example, the principles herein may be applied to any hydronic or liquid system which benefits from a filtration device.

The operating means 35 may be embodied as e.g. a knob, a handle, a rotation means, a push button, a slider, or a combination of the aforementioned operating means.

The separation means 14 may be embodied as a strainer, sieve or any other suitable separation means. In some embodiment, the filtration device 1 is not provided with a separation means 14.

Those skilled in the art will readily recognize various modifications and changes that may be made to the present invention without following the example embodiments and applications illustrated and described herein, and without departing from the scope of the present disclosure.

## Claims

1. A filtration device (1) comprising:
a valve portion (20) having a valve housing (24) and a valve member (21),
wherein the valve housing (24) comprises a valve housing inlet (25) and a valve housing outlet (26), wherein the valve housing outlet (26) has an annular shape and is concentric relative the valve housing inlet (25),
wherein the valve member (21) is positioned within the valve housing (24) and comprises a valve member inlet (22) and a valve member outlet (23), and
wherein the valve member (21) is moveable between an open position of the valve portion (20) and a closed position of the valve portion (20),
a filter portion (10) having a separation tank (11) configured to receive liquid when the valve portion (20) is in the open position, and
a flow plate (30) separating the valve portion (20) and the filter portion (10), wherein the flow plate (30) comprises an ejector (31) configured to direct liquid into the separation tank (11) in a direction towards an inner surface of the separation tank (11) such that a liquid cyclone is obtained.

2. The filtration device (1) according to claim 1, wherein in the closed position of the valve (20), the valve member outlet (23) and the valve housing outlet (26) are positioned in a non-communicating position, and the valve member inlet (22) and the valve housing inlet (25) are positioned in a non-communicating position.

3. The filtration device (1) according to claims 1 or 2, wherein in the open position of the valve (20), the valve member inlet (22) is in fluid communication with the valve housing inlet (25), and the valve member outlet (23) is in fluid communication with the valve housing outlet (26).

4. The filtration device (1) according to any one of claims 1-3, wherein the filtration device (1) further comprises an operating means (35) configured to allow movement of the valve member (21).

5. The filtration device according to any one of claims 1 to 4, wherein the valve member (21) is rotatable between the open position of the valve portion (20) and the closed position of the valve portion (20), optionally wherein the valve member (21) is rotatable approximately 90° between the open position and the closed position.

6. The filtration device (1) according to any one of claims 1 to 4, wherein the valve member (21) is translationally moveable between the open position of the valve (20) and the closed position of the valve portion (20).

7. The filtration device (1) according to any one of claims 1 to 6, wherein the valve member inlet (22) has an approximately circular shape matching a shape of the valve housing inlet (25).

8. The filtration device (1) according to any one of claims 1 to 7, wherein the valve member outlet (23) has an approximately circle segment shape matching a shape of at least a portion of the valve housing outlet (26).

9. The filtration device (1) according to any one of the preceding claims, wherein the separation tank (11) comprises a thermowell (12) housing a magnet (13) configured to attract magnetic particles from the liquid.

10. The filtration device (1) according to any one of the preceding claims, wherein the separation tank (11) comprises a separation means (14) configured to collect particles from the liquid, optionally wherein the particles are non-magnetic particles.

11. The filtration device (1) according to any one of the preceding claims, wherein the separation tank (11) comprises a separation plate (16) dividing the separation tank (11) into a collection portion (19) configured to accumulate particles separated from the liquid, optionally wherein the particles are non-magnetic particles.

12. The filtration device (1) according to any one of the preceding claims, wherein the ejector (31) is in fluid communication with the valve member inlet (22) in the open position of the valve (20).

13. The filtration device (1) according to any one of any one of the preceding claims, wherein the valve housing (24) is part of a housing of the filtration device (1).

14. The filtration device (1) according to any one of the preceding claims, further comprising at least one sealing means (40) configured to seal an interface between the valve housing (24) and the valve member (21).

15. A hydronic system comprising the filtration device (1) according to any one of the preceding claims.
